# EUROPEAN PATENT APPLICATION

(11) **EP 4 601 305 A1**
(43) Date of publication of application: **13.08.2025**
(21) Application number: 23877600.9
(22) Date of filing: 06.10.2023
(51) Int. Cl.: H04N 21/8549, H04N 21/218, H04N 21/2187, H04N 21/61, H04N 21/472

(54) **USER EQUIPMENT, SERVER, AND SYSTEM FOR IMAGE CONTENT GENERATION, AND METHOD THEREFOR**

(30) Priority: 13.10.2022 KR 20220131024
(71) Applicant: LG Electronics Inc., Yeongdeungpo-gu Seoul 07336 (KR)
(72) Inventor: YOO, Huisang, Seoul 06772 (KR); LEE, Gyoyoon, Seoul 06772 (KR); HONG, Sungryong, Seoul 06772 (KR)
(74) Representative: Frenkel, Matthias Alexander
(86) International application number: PCT/KR2023/015384
(87) International publication number: WO 2024/080672

(57) **Abstract**

A user terminal is proposed. The user terminal may comprise: a transceiver for transmitting or receiving data to or from a server; a display for outputting image content received from the server; and a processor for controlling the transceiver and the display, wherein the processor generates marker information including a start time point and an end time point, transmits a request for summary image content including the generated marker information to the server, and receives information on the summary image content in response to the request.

## Description

### [Technical Field]

The present disclosure relates to a user terminal, a server, and a system for creating video content, and a method therefor.

### [Background]

In the 3^{rd} generation project partner (3GPP), standardization of technologies for media streaming in a 5G environment is continuously progressing. Among them, 3GPP TS26.501 is establishing a system architecture for providing fast and stable media solutions using mobile edge computing (MEC). In the TS26.501, a 5G media streaming (5GMS) application function (AF) is defined in the MEC to exchange interfaces with a user terminal (UE) and an application provider.

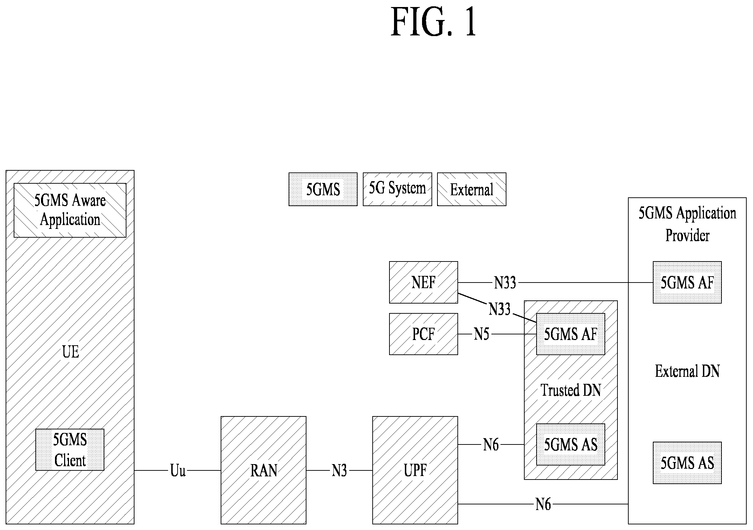

Further, the 5GMS AF is also in communication with a policy control function (PCF) of a 5G core system to determine a state of a 5G network. The standard defines a 5G media streaming application server (5GMS AS) to provide a download streaming service for content received from the application provider to the user terminal (UE) or support uplink streaming from the UE to the 5GMS application server (AS). FIG. 1 illustrates the architecture of the 5G media streaming defined in the 3GPP TS26.501.

With respect to FIG. 1, the streaming is defined as continuous media transmission over time. The streaming mainly refers to a fact that media is transmitted primarily in only one direction and consumed as it is received. Further, media content may be streamed as it is created, which is called live streaming. When content that has already been created is streamed, it is called on-demand streaming.

### [Summary]

### [Technical Problem]

The present disclosure is to propose a user terminal, a server, and a system for creating video content, and a method therefor.

More specifically, the present disclosure is to propose a device, a method, and the like for requesting a user-customized summary content video and receiving information on the same.

In one example, the present disclosure is to propose a method for utilizing an interface between two entities not defined in 3GPP TS.

Problems to be solved in the present disclosure are not limited to the problems above, and other problems not mentioned are able to be clearly understood by a person having ordinary knowledge in the technical field to which the present disclosure belongs from the description below.

### [Technical Solutions]

A user terminal for summary video content is proposed. The user terminal includes a transceiver that transmits and receives data with a server, a display that outputs video content received from the server, and a processor configured to control the transceiver and the display, and the processor generates marker information including a start time point and an end time point, transmits a request for summary video content including the generated marker information to the server, and receives information on the summary video content in response to the request.

A server for summary video content is proposed. The server includes a transceiver that transmits and receives data with a user terminal, and a processor configured to control the transceiver, and the processor receives a request for summary video content including marker information from the user terminal, the marker information including a start time point and an end time point, and transmits information on the summary video content to the user terminal in response to the request.

A system for summary video content is proposed. The system includes a user terminal, and a server that provides summary video content to the user terminal, the user terminal generates marker information including a start time point and an end time point, and transmits a request for summary video content including the generated marker information to the server, and the server receives the request for the summary video content including the marker information from the user terminal, the marker information including the start time point and the end time point, extracts the summary video content based on the marker information from original video content indicated by the request, and transmits information on the summary video content to the user terminal.

The above technical solutions are only some of the embodiments of the present disclosure, and various embodiments reflecting the technical features of the present invention are able to be derived and understood by a person having ordinary skill in the art based on the detailed description of the present disclosure to be described below.

### [Advantageous Effects]

The present disclosure has following effects.

The present disclosure may provide the user-customized summary video content, and thus, may improve user experience.

In addition, the present disclosure may provide the immediate summary video content creation request for the live video content or the original video content and the response reception therefor.

The present disclosure may provide the setting for requesting the user-customized summary video content, a resource type therefor, and the like.

Effects of the present disclosure are not limited to the effects mentioned above, and other effects not mentioned are able to be clearly understood by those skilled in the art to which the present disclosure belongs from the detailed description of the present disclosure below.

### [Brief Description of the Drawings]

The accompanying drawings, which are incorporated as part of the detailed description to aid in understanding the present disclosure, provide an embodiment of the present disclosure and, together with the detailed description, illustrate the technical ideas of the present disclosure.
FIG. 1 illustrates an architecture representing a 5GMS function in a 5G system.
FIG. 2 illustrates a generalized version of the architecture illustrated in FIG. 1.
FIG. 3 illustrates a 5G unicast downlink media streaming architecture.
FIG. 4 illustrates a 5GMS architecture according to an embodiment of the present disclosure.
FIG. 5 illustrates in detail a procedure of creating and receiving summary video content according to an embodiment of the present disclosure.
FIG. 6 illustrates a procedure in a scenario according to an embodiment of the present disclosure.
FIG. 7 illustrates a scenario for a summary video content request according to an embodiment of the present disclosure.
FIG. 8 illustrates a block diagram of a server 100 and a user terminal 200 of the present disclosure.

### [Best Mode]

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

A 5GMS application provider uses 5GMS for a streaming service. The streaming service provides a 5GMS Aware-application using an interface and an API defined in 5GMS to utilize a 5GMS client and a network function in a UE.

The 5GMS application provider and the 5GMS Aware-application are defined as follows:
- 5GMS application provider: an entity that interacts with functions of a 5GMS system and provides the 5GMS-Aware application that interacts with the functions of the 5GMS system
- 5GMS-Aware application: an application in the UE provided by the 5GMS application provider, including service logic of a 5GMS application service, and interacting with other 5GMS clients and network functions via the interface and the API defined in the 5GMS architecture

The architecture in FIG. 1 represents a specific 5GMS function in a 5G system (5GS). The corresponding architecture defines following three main functions:
- 5GMS AF: an application function similar to an application function defined in section 6.2.10 of TS 23.501 that is dedicated to the 5G media streaming
- 5GMS AS: an application server that is dedicated to the 5G media streaming
- 5GMS client: a UE internal function that is dedicated to the 5G media streaming. The 5GMS client is a logical function and sub-functions thereof are able to be distributed within the UE depending on an implementation choice

The 5GMS AF and the 5GMS AS are data network (DN) functions and are in communication with the UE over N6 as defined in the TS 23.501.

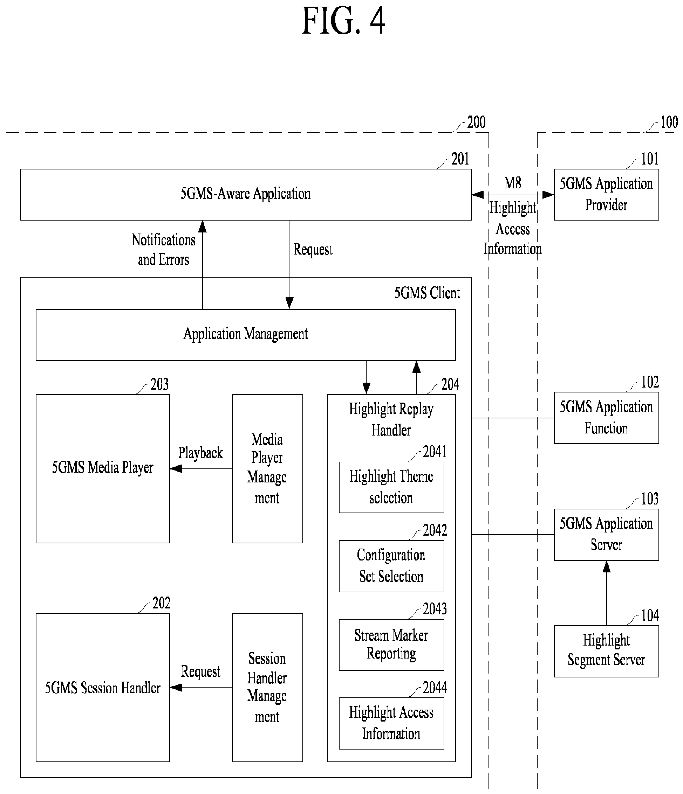

A function within a trusted DN, i.e. a 5GMS AF within the trusted DN is trusted in an operator network as shown in FIG. 4.2.3-5 of the TS 23.501. Therefore, such AF may be in direct communication with a relevant 5G core function.

A function within an external DN, for example, a 5GMS AF within the external DN, may only be in communication with the 5G core function when using N33 via an NEF.

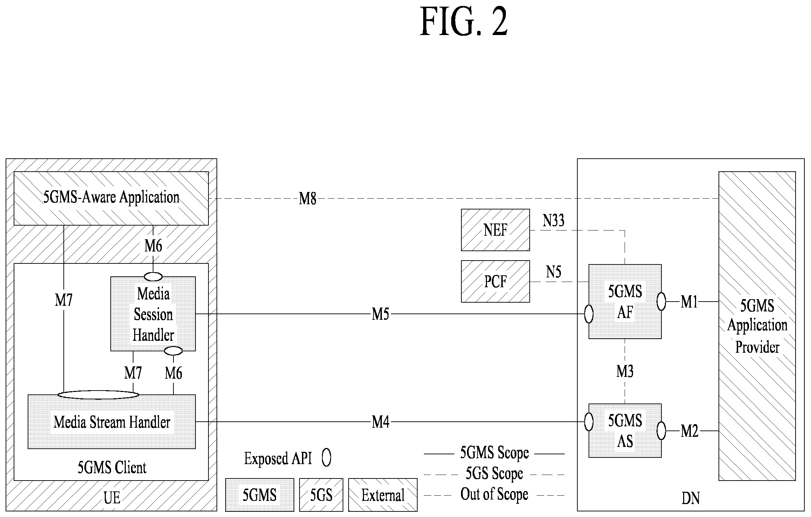

The 5GMS architecture maps an overall high-level architecture illustrated in FIG. 1 above to a generic architecture illustrated in FIG. 2.

The corresponding architecture addresses two main scenarios for an individual media streaming task:
- Downlink streaming: a network is an origin of media and the UE acts as a consuming entity
- Uplink streaming: the UE is the origin of the media and the network acts as the consuming entity

A functional entity and an interface of the generic media streaming architecture may be described with specifics related to the downlink and uplink streaming, but in the present document, only the downlink will be described. To this end, the corresponding description will be made by adding a suffix "d" to an appropriate downlink function in each case.

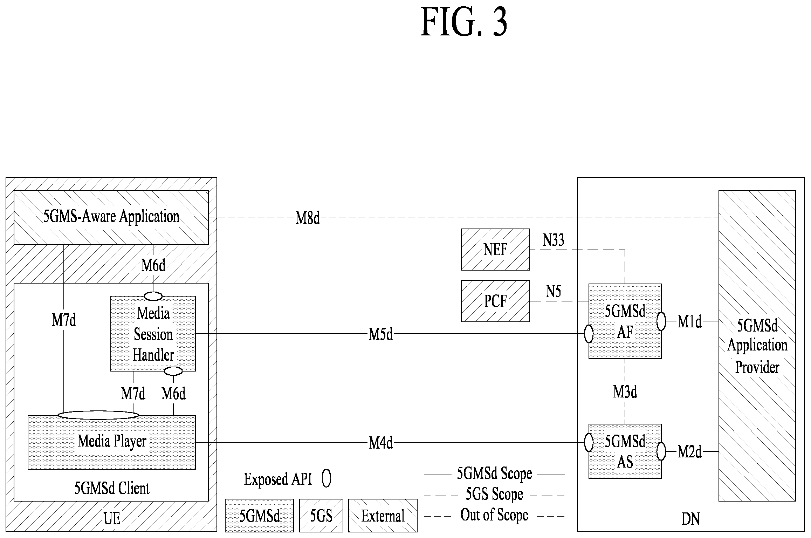

FIG. 3 illustrates a 5G unicast downlink media streaming architecture. The following is a description of an interfaces defined for 5G unicast downlink media streaming, as illustrated in FIG. 3.

M1d (5GMSd provisioning API): an external API exposed from a 5GMSd AF, allowing a 5GMSd application provider to provision use of the 5G media streaming system for the downlink media streaming and receive feedback.

M2d (5GMSd ingest API): an optional external API used when selected by a 5GMSd AS, and used when hosting content for the streaming service within the trusted DN.

M3d: (internal and unspecified): an internal API used to exchange information on content hosting with the 5GMSd AS within the trusted DN.

M4d (media streaming API): an API exposed from the 5GMSd AS to stream the media content to a media player.

M5d (media session handling API): an API exposed from the 5GMSd AF to a media session handler, used for media session handling, control, reporting, and support, and including an appropriate security mechanism such as authorization and authentication.

M6d (UE media session handling API): an API exposed from the media session handler to the media player, used for client internal communication, and exposed to a 5GMSd-aware application to utilize a 5GMS feature.

M7d (UE media player API): an API exposed from the media player to the 5GMSd-aware application and the media session handler, allowing the media player to be utilized.

M8d: (application API): an application interface used for information exchange between the SGMSd-aware application and a 5GMSd application provider, located outside the 5G system, and not specified by the 5GMS.

The 3GPP TS26.501 was proposed with a technical goal of transmitting data for the media streaming, file downloading, and the like to a plurality of user terminal (UE) at the same time point over the 5G network.

A 5G media streaming scheme supports two media formats: MPEG's DASH based on HTTP and Apple's HLS. The 5G media streaming (5GMS) technology has an advantage of being able to provide the corresponding service without an additional load resulted from an increase in the number of user terminal present within the same cell because the plurality of user terminal are able to receive the same multimedia data at the same time point. Such technology may be applied to various services such as a mobile TV, an IoT, a connected car, an SW update of a terminal and an application using an idle time, real-time information transmission to a customer in a specific space, and data offloading.

In particular, as a smart stadium solution via construction of a 5G specialized network, a real-time event broadcasting application service of various specific areas such as sports, concerts, and award ceremonies may be applied.

However, because the M8 and M8d interfaces in FIGS. 2 and 3 are not specifically defined in the standard, there is no means to provide them based on the 5GMS architecture in various fields such as sports broadcasting, live concerts, and CCTVs, so that the 5GMS is not able to be expanded to the application service.

As a major use case, a smart stadium application service may be provided, and an application service may be applied that may receive a customized 'live highlight service' by selecting a scene of interest in real time via remote control. Accordingly, selecting only various scenes other than an existing broadcasting screen and watching a short video clip of the various scenes may be enabled.

Herein, a highlight short video clip means summary video content that includes a main scene in original video content. The main scene means a set of video frames in the original video content, which is determined based on an algorithm or a method set in advance in a highlight segment server 104 to be described below and/or marker information from a user (equipment).

Accordingly, it is noted in advance that the "highlight short video clip" and the "summary video content" in the present document may be referred to interchangeably.

The present disclosure proposes a method for creating and producing media corresponding to user-customized summary video content in the 5GMS transmission/reception environment based on the 5GMS architecture.

FIG. 4 illustrates a 5GMS architecture according to an embodiment of the present disclosure.

The 5GMS architecture is largely composed of a server or network system 100 and a user terminal 200.

The network system 100 includes a 5GMS application provider 101, a 5GMS AF 102, a 5GMS AS 103, and the highlight segment server 104. Because the 5GMS application provider 101, the 5GMS AF 102, and the 5GMS AS 103 have been described above, descriptions thereof will be omitted. In addition, the components of the server 100 illustrated in FIG. 4 are all logical components and are able to be physically implemented as components such as a processor, and functions or definitions thereof are able to be stored in storage such as a memory.

The highlight segment server 104 is an application server that creates the summary video content from the original media (i.e., the video content) and hosts the summary video content to the user terminal.

In addition, the user terminal 200 may include a 5GMS-aware application 201, a 5GMS session handler 202, a 5GMS media player 203, and a highlight replay handler 204. In addition, the user terminal 200 may include an application manager, a media player manager, and a session handler manager. Because the 5GMS-aware application 201, the 5GMS session handler 202, and the 5GMS media player 203 have been described above, descriptions thereof will be omitted. In addition, the components of the user terminal 200 illustrated in FIG. 4 are all logical components and are able to be physically implemented as components such as the processor, and functions or definitions thereof are able to be stored in the storage such as the memory.

The highlight replay handler 204 may include a highlight theme selector 2041, a configuration set selector 2042, a stream marker reporter 2043, and highlight access information 2044.

The highlight theme selector 2041 may provide a function that allows the user to select a theme of a highlight for the video content based on a category, such as a person (or a character), an action (or an event), a landscape, and a sound. Accordingly, the user (equipment) may set a theme for a criterion for extracting the summary video content from the original video content. As a result, the user (equipment) may obtain the summary video content based on the highlight theme or access the corresponding summary video content. The highlight theme may be included in the marker information to be described below.

The configuration set selector 2042 may record a time point (i.e., time information) at which the user wants to produce the highlight video content by watching a live broadcast or real-time video content or executing an application for collecting the marker information.

In this regard, the marker information may include information on a time point (i.e., a start/end time point) that is a target of the highlight video content in the original video content or information on a time point corresponding thereto, and may include information on the highlight theme.

The stream marker reporter 2043 transmits the collected marker information to the 5GMS application provider 101 via the 5GMS-aware application 201, and causes the highlight segment server 104 to create the highlight short video clip using the same. In this regard, the marker information is transmitted via the M8 (M8d) interface.

The highlight access information 2044 may obtain media entry point address information (e.g., uniform resource indicator (URL)) for playing or accessing the highlight short video clip created by the highlight segment server 104, and may transfer the obtained media entry point address information to the media player 203. The media player 203 may access or play the highlight short video clip using the media entry point address information.

The application manager is responsible for association with a DB and other modules for providing the API to the SGMS(d)-aware application 201 and control thereof. The media player manager is responsible for association with a DB and other modules for providing the API to the media player 203 and control thereof. The session handler manager 202 is responsible for association with a DB and other modules for providing the API to the session handler 202 and control thereof.

The SGMS(d)-aware application 201 and the SGMS(d) application provider 101 may exchange information defined as follows via the interface (M8(d)).

**[Table 1]**

| **Property name** | **Type** | **Usage** | **Description** |
|---|---|---|---|
| *HighlightType* | Object | RO | The type of Highlight [Human, Activity, Scene, Audio, reserved] |
| *HighlightStreamingAccess* | Object | RO | |
| *highlightMediaPlayerEntry* | Url | RO | A document or a pointer to a document that defines a media presentation e.g. MPD for DASH content or URL to a video clip file. |
| *HighlightConfiguration* | Object | RO | |
| *streamMarker* | marker[ ] | RO | Timing markers of the highlight video clip. |
| *startPoint* | Time | RO | Start timestamp. |
| *endPoint* | Time | RO | End timestamp. |

In one example, with respect to FIG. 4, names of the network system 100 and the user terminal 200 may not limit the present disclosure, and the components 101, 102, 103, and 104 of the network system may be physically separate components or at least two of them may be combined into one physical component.

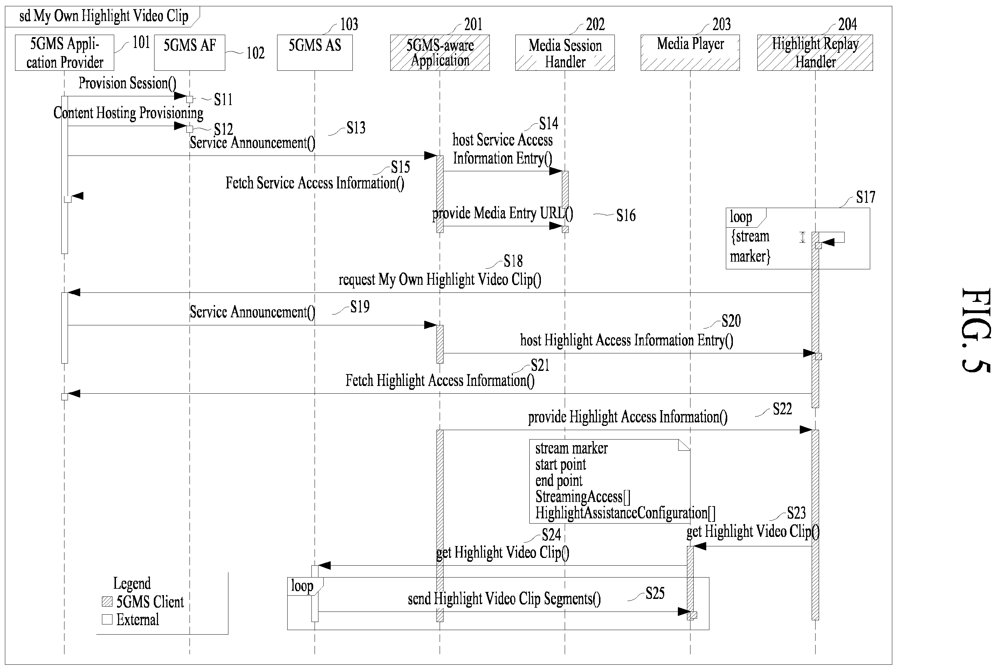

FIG. 5 illustrates in detail a procedure of creating and receiving summary video content according to an embodiment of the present disclosure.

The 5GMS application provider 101 generates a provisioning session with the 5GMS AF and performs content hosting provisioning (S11 and S12).

The provisioning session is a data structure that sets 5GMS features for a set of 5GMS-aware applications supplied to the M1 interface (the interface between the 5GMS application provider 101 and the 5GMS AF, see FIG. 2) by the 5GMS application provider 101. The M1(d) interface corresponds to an external API exposed by the 5GMS(d) AF for the 5GMS(d) application provider to provision the use of the 5G media streaming system for the downlink media streaming and obtain feedback thereon.

When the content hosting is provided and selected, interaction occurs between the 5GMS AF 102 and the 5GMS AS 103 for content ingestion and distribution resources. The 5GMS AS 103 allocates the resources and forwards the ID to the 5GMS AF 102.

The 5GMSd application provider 101 provides service announcement information to the SGMSd-aware application 201 (S13). The service announcement may include full service access information (detailed information on the media session handling (M5d) and the media streaming access (M4d)) or a reference to the service access information or pre-configured information. When only the reference is included, the 5GMSd client retrieves the service access information when needed.

When the 5GMSd-aware application 201 decides to start the downlink streaming, the service access information (full or reference) is provided to the media session handler 202 (S14). The media session handler 202 activates a unicast downlink streaming session.

The service access information (reference) includes, for example, information such as the uniform resource indicator (URL), and the media session handler 202 fetches the service access information (S15).

The SGMSd-aware application 201 provides a media entry to the media session handler 202 (S16). The media session handler 202 activates reception of the media content. That is, it receives the downlink streaming content via the media player 203.

Thereafter, the highlight replay handler 204 may generate or store the marker information including information to be created as the highlight video content (S17). The marker information may include the information on the time point (i.e., the start/end time point) that is the target of the highlight video content in the original video content or the information on the time point corresponding thereto, and may include the information on the highlight theme.

The marker information may be about the highlight video content for a plurality of time ranges. In this case, the marker information may also include plurality of time point information that are the targets of the highlight video content.

The highlight replay handler 204 may transmit a highlight creation request to the 5GMS application provider 101 (S18), and the highlight creation request may include the marker information generated above.

The 5GMS application provider 101 may transmit the highlight access information for playing the highlight video content to the highlight replay handler 204 via the 5GMS-aware application 201 (S19 and S20). In this regard, the service announcement information is used (S19), and the highlight access information is transmitted from the 5GMS-aware application 201 to the highlight replay handler 204 (S20).

The media session handler 202 fetches the highlight access information (S21).

The 5GMS-aware application 201 triggers the highlight replay handler 204 to initiate the streaming of the highlight video content, and provides the highlight access information therefor (S22).

The highlight access information may include the information of Table 1 described above, and specifically, may include one or more stream markers (each composed of a start point and an end point), and address information for accessing the highlight video content or information corresponding thereto. When the highlight video content for the plurality of time ranges is requested in S18, the highlight access information includes a plurality of stream markers.

The highlight replay handler 204 may transmit an acquisition request for the highlight video content to the media player 203 (S23). The acquisition request may include the address information for accessing the highlight video content included in the highlight access information or the information corresponding thereto.

Accordingly, the media player 203 may transmit the request for the highlight video content to start the unicast downlink streaming session to the 5GMS AS 103 (S24).

The media player 203 may receive the corresponding highlight video content and play the same (S25).

Among the procedures illustrated in FIG. 5, S18, S19, and S23 are performed with the transmission via the M8(d) interface in FIG. 2 or 3, and enable the request and a response for the user-customized highlight video content according to the present disclosure to be transmitted and received between the server 100 and the user terminal 200.

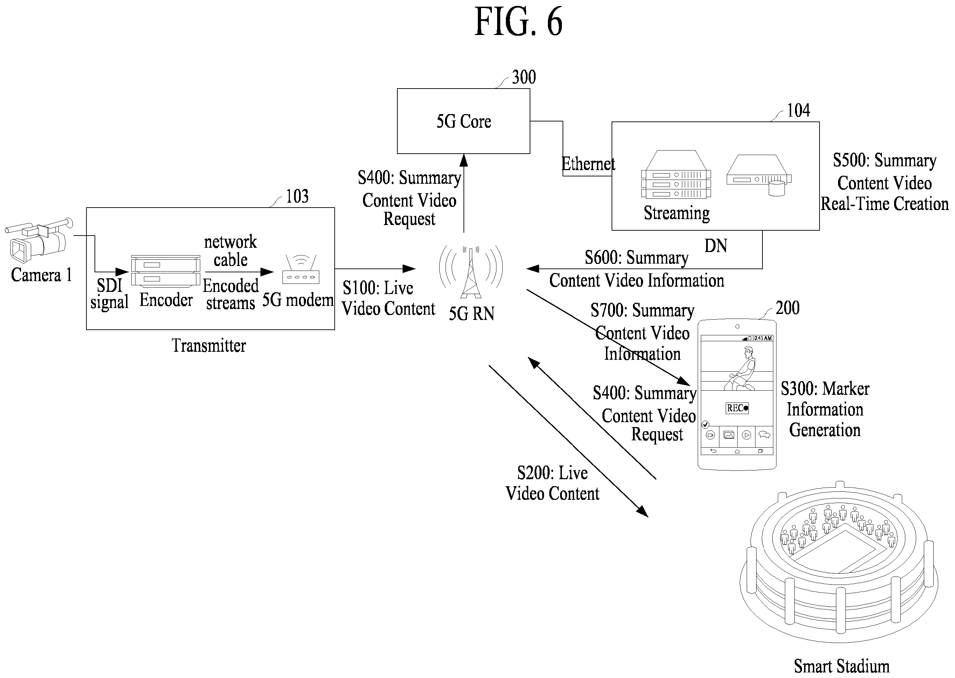

FIG. 6 illustrates a procedure in a scenario according to an embodiment of the present disclosure.

The embodiment illustrated in FIG. 6 relates to application of a 5GMS-based media transmission system in a sports/media entertainment vertical field in a 5G specialized network.

A private 5G is a dedicated 5G wireless network that is separated from a telecommunications company network and is privately usable. It may be customized as desired by the user and may provide ultra-low latency communication speed between devices. It is suitable for a need for ultra-high-speed/ultra-low-latency/ultra-connected business to business (B2B) service dedicated to the 5G service, a 5G specialized service demand for only a specific institution/company, and securing data safety of dedicated network, based on non-public network (NPN) and mobile edge computing (MEC) technologies specialized for the 5G service in a specific area such as a building and a factory.

FIG. 6 illustrates a 5G-based media transmission solution for editing and distributing local media content in a smart stadium.

The 5GMS application provider 101 may provide live video content to the user terminal 200 in the smart stadium via the 5G network (S100 and S200).

The user terminal 200 may generate marker information for creating summary video content for the live video content (S300).

The marker information may include a specific range (i.e., including a start time point and an end time point) of the live video content (i.e., the original video content). This is to request the video content provider (or transmitter) to create the summary video content within the specific range. As a result, the user terminal 200 may receive or play the summary video content created based on the marker information using summary content video information (S700) to be described below.

In addition, the marker information may include information on a specific object in the live video content. This is to request the video content provider (or transmitter) to create summary video content including a scene in which the specific object (e.g., a specified person) appears. As a result, the user terminal 200 may receive or play the summary video content created based on the marker information using the summary content video information (S700) to be described below. In other words, the summary video content edited and created based on the scene including the specific object will be created.

Accordingly, the user terminal 200 may request, download, or play the summary video content requested by the user, and provide a real-time user-customized service via these procedures, methods, and the like.

Then, the user terminal 200 may transmit a summary video content request including the marker information to an uplink (S400).

The summary video content request transmitted to the uplink is transmitted to the highlight segment server 104 via a 5G core network 300. Because the interface between the 5GMS AS 103 and the media player 203 (i.e., the M4d, see FIG. 3 and the description corresponding thereto) is a dedicated interface for the 5GMS, the summary video content request may be transmitted via the 5G core network. However, this is an example, and when it is assumed that another interface (e.g., the M5d interface) or connection supports the transmission of the summary video content request, the summary video content request may be transmitted via the corresponding interface or connection.

Upon receiving the summary video content request, the highlight segment server 104 may create the summary video content based on the request (S500) and may transmit information on the summary video content corresponding thereto to the user terminal 200 (S600).

The user terminal 200 may receive the information on the summary video content corresponding to the summary content request (S700).

Then, the user terminal 200 may receive and play the summary video content using the information on the summary video content.

Although only one camera is illustrated in FIG. 6, live video content, i.e., the original video content, filmed by one or more cameras may exist depending on implementation. In addition, the original video content filmed by the plurality of cameras may generate a candidate group for creating the summary video content.

In addition, the plurality of cameras may not be owned by one subject (such as the content provider), and at least one of them may belong to at least one general content consumer, i.e., the user. Accordingly, the original video content may be filmed by the camera of the at least one user (or user terminal).

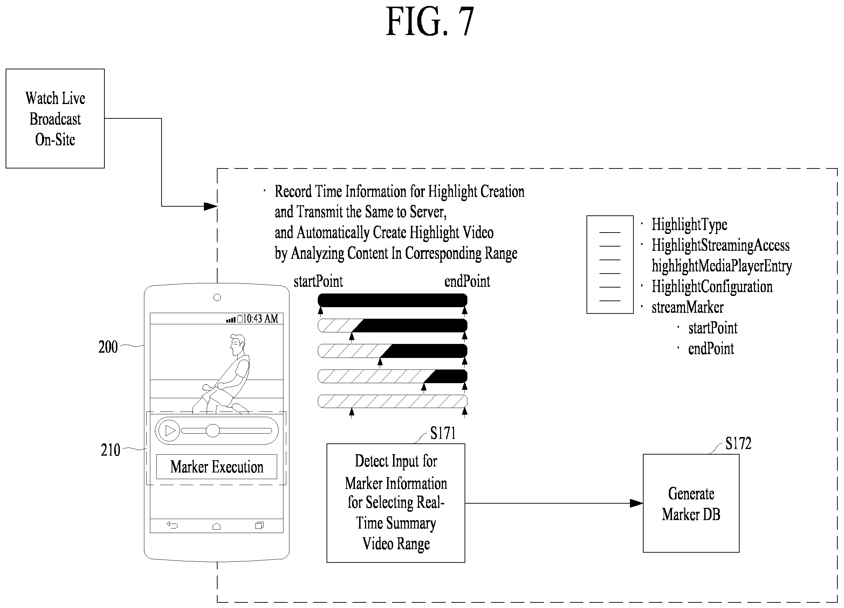

FIG. 7 illustrates a scenario for a summary video content request according to an embodiment of the present disclosure.

While watching a live broadcast on-site, the user provides an input for marker information via a user input interface 210 output on a display of the user terminal 200, and the marker information is generated accordingly.

More specifically, the user terminal 200 may detect the input for the marker information for selecting a real-time summary video range (S171). Then, the user terminal 200 may generate or construct a marker database (DB) based on the marker information (S172).

As an example of the marker information, information illustrated in an upper right end of FIG. 7 is suggested, which is the same as the information listed in Table 1 described above.

The user terminal 200 may transmit a summary video content request including the marker information to the server 100. The server 100 that has received the summary video content request may analyze the original video content in the time range (the start and end time points) of the marker information, and create the summary video content based on a preset algorithm or scheme. Accordingly, the summary video content may have a smaller length than the time range specified by the marker information.

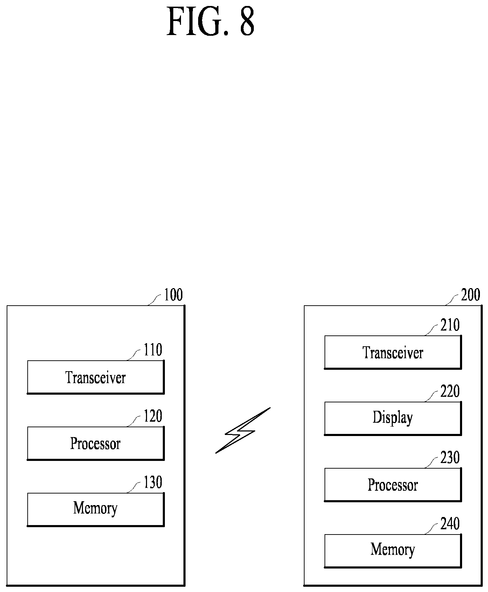

FIG. 8 illustrates a block diagram of the server 100 and the user terminal 200 of the present disclosure.

The server 100 includes a transceiver 110 that transmits and receives data with the user terminal 200 and a processor 120 for controlling the transceiver. In addition, the server 100 may include a memory 130 that generates and stores information related to the present disclosure, such as, for example, Table 1.

In addition, the memory 130 may store an algorithm or a scheme for acquiring, creating, or extracting the summary video content from the original video content based on the received marker information. For a specific method for acquiring, creating, or extracting the summary video content of the server 100, refer to International Patent Application No. PCT/KR2022/004008 and German Patent No. 112021002685.2.

The processor 120 receives the request for the summary video content including the marker information including the start time point and the end time point related to the original video content from the user terminal 200. The processor 120 transmits the information on the summary video content to the user terminal 200 in response to the request for the summary video content.

The processor 120 may acquire, create, or extract the summary video content based on the marker information received from the original video content indicated by the request for the summary video content. In addition, the processor 120 may generate access address information of the summary video content. The information on the summary video content transmitted to the user terminal 200 may include the generated access address information.

The user terminal 200 may include a transceiver 210 that transmits and receives data with the server 100, a display 220 that outputs the video content received from the server 100, and a processor 230 for controlling the transceiver and the display. In addition, the user terminal 200 may include a memory 240 that generates and stores the information related to the present disclosure, such as, for example, Table 1.

The processor 230 generates the marker information including the start time point and the end time point related to the original video content. In addition, the processor 230 transmits the request for the summary video content including the generated marker information to the server 100. The processor 230 receives the information on the summary video content in response to the transmitted request for the summary video content.

In this regard, the marker information may include theme-related information of the summary video content or information indicating the specific object of the summary video content.

In addition, prior to generating the marker information, the processor 230 may receive, from the server 100, a setting for the theme-related information of the summary video content that may be requested. The processor 230 may detect a user input of selecting one or more of various theme-related information included in the setting for the theme-related information. Based on this, the processor 230 may generate the marker information.

In addition, the processor 230 may output a user input interface for inputting the marker information on the display 220 and detect the input for the marker information via the user input interface. When the input for the marker information is detected, the processor 230 may generate the marker information based thereon.

The processor 230 may start the unicast downlink streaming session with the server 100 and play the summary video content using the received information on the summary video content.

In addition, the summary video content may include the video content extracted based on the marker information from the video content filmed by the plurality of cameras. In addition, the summary video content may include the video content extracted based on the marker information from the video content filmed by the at least one user's camera.

In one example, the present disclosure may be implemented as a system composed of the server 100 and the user terminal 200 as illustrated in FIG. 8. The system may realize the content, the features, the procedures, and the like related to FIG. 5 described above and perform the operation of the server 100 or the user terminal 200 described with reference to FIG. 8. To avoid redundant description, a specific description of the corresponding system will be omitted.

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. A user terminal comprising:
a transceiver configured to transmit and receive data with a server;
a display configured to output video content received from the server; and
a processor configured to control the transceiver and the display,
wherein the processor is configured to:
generate marker information including a start time point and an end time point;
transmit a request for summary video content including the generated marker information to the server; and
receive information on the summary video content in response to the request.

2. The user terminal of claim 1, wherein the processor is configured to:
start a unicast downlink streaming session with the server; and
play the summary video content using the received information on the summary video content.

3. The user terminal of claim 1 or 2, wherein the marker information includes theme-related information of the summary video content.

4. The user terminal of claim 1 or 2, wherein the marker information includes information indicating a specific object of the summary video content.

5. The user terminal of claim 3, wherein the processor is configured to receive a setting for requestable theme-related information of the summary video content from the server.

6. The user terminal of claim 1, wherein the summary video content includes video content extracted based on the marker information from video content filmed by a plurality of cameras.

7. The user terminal of claim 1, wherein the summary video content includes video content extracted based on the marker information from video content filmed by at least one user's camera.

8. The user terminal of claim 1, wherein the processor is configured to output a user input interface for inputting the marker information on the display, and detect the input for the marker information via the user input interface.

9. A server comprising:
a transceiver configured to transmit and receive data with a user terminal; and
a processor configured to control the transceiver,
wherein the processor is configured to:
receive a request for summary video content including marker information from the user terminal, the marker information including a start time point and an end time point; and
transmit information on the summary video content to the user terminal in response to the request.

10. The server of claim 9, wherein the processor is configured to extract the summary video content based on the marker information from original video content indicated by the request.

11. The server of claim 10, wherein the processor is configured to generate access address information of the extracted summary video content.

12. The server of claim 9, wherein the summary video content includes video content extracted based on the marker information from video content filmed by a plurality of cameras.

13. The server of claim 9, wherein the summary video content includes video content extracted based on the marker information from video content filmed by at least one user's camera.

14. A system comprising:
a user terminal; and
a server configured to provide summary video content to the user terminal,
wherein the user terminal is configured to generate marker information including a start time point and an end time point, and transmit a request for summary video content including the generated marker information to the server,
wherein the server is configured to receive the request for the summary video content including the marker information from the user terminal, the marker information including the start time point and the end time point, extract the summary video content based on the marker information from original video content indicated by the request, and transmit information on the summary video content to the user terminal.

15. The system of claim 14, wherein the summary video content includes video content extracted based on the marker information from video content filmed by a plurality of cameras.

16. The system of claim 14, wherein the summary video content includes video content extracted based on the marker information from video content filmed by at least one user's camera.
